# EUROPEAN PATENT SPECIFICATION

(11) **EP 3 324 678 B1**
(45) Date of publication and mention of the grant of the patent: **13.11.2019**
(21) Application number: 17201961.4
(22) Date of filing: 15.11.2017
(51) Int. Cl.: H04W 36/24, H04W 36/00

(54) **CELL RESELECTION BASED ON DIFFERENCE BETWEEN CURRENT CELL RESELECTION TIME AND CELL RESELECTION TIME IN HISTORY PING-PONG RESELECTION RECORD**
ZELLENNEUAUSWAHL AUF DER BASIS DER DIFFERENZ ZWISCHEN DER ZEIT DER AKTUELLEN ZELLENNEUAUSWAHL UND DER ZEIT DER ZELLENNEUAUSWAHL IN EINEM HISTORISCHEN REGISTER VOM PING-PONG DER ZELLENNEUAUSWAHL
RESÉLECTION DE CELLULES BASÉE SUR LA DIFFÉRENCE ENTRE LE TEMPS PRÉSENT DE RESÉLECTION DE CELLULE ET LE TEMPS DE RESÉLECTION DE CELLULE DANS UN REGISTRE HISTORIQUE DE PING-PONG DE RESÉLECTION

(30) Priority: 21.11.2016 CN 201611027839
(43) Date of publication of application: 23.05.2018
(73) Proprietor: Beijing Xiaomi Mobile Software Co., Ltd., Beijing 100085 (CN)
(72) Inventor: ZHANG, Guoquan, Haidian District, Beijing 100085 (CN); HUANG, Qianhong, Haidian District, Beijing 100085 (CN)
(74) Representative: Loustalan, Paul William

(56) References cited:
- WO-A1-2006/096036
- WO-A1-2009/004405
- US-A1- 2014 274 063
- US-A1- 2016 007 260
- ALCATEL-LUCENT (RAPPORTEUR): "Report of email discussion [84#31][LTE/Het-Net] Mobility information upon IDLE->CONNECTED", 3GPP DRAFT; R2-140703_84_31-FINAL-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 13 February 2014 (2014-02-13), XP050792131, Retrieved from the Internet: URL:http://www.3gpp.org/ftp/Meetings_3GPP_ SYNC/RAN2/Docs/ [retrieved on 2014-02-13]

## Description

### TECHNICAL FIELD

The present application generally relates to the communication technical field, and more particularly, to a method and device for cell reselection, as well as a corresponding computer program product.

### BACKGROUND

At present, ping-pong reselection phenomenon often occurs during cell reselection due to improper configuration of network reselection parameters. For example, when a terminal is residing in a cell A, the terminal may select a cell B according to current cell reselection parameters. When the terminal is residing in the cell B, the terminal may select the cell A again according to the cell reselection parameters. Such frequent switching between two cells is referred to as the ping-pong reselection. The ping-pong reselection will result in high standby current of the terminal, and thereby influence the standby time of the terminal and user experience.

WO2009/004405A1 provides a method and respective entities for avoiding handovers in a ping-pong manner in a communication network. The method comprises comparing, when a handover of a mobile station to a base station is intended, decision criteria of the intended handover with decision criteria of previous handovers of the mobile station to that base station, and deciding on allowing or preventing the intended handover based on the result of the comparison.

US2016/0007260A1 provides a cell reselection method for reducing ping-pong phenomena. The method comprises the steps of: receiving information on ping-pong detection standards; determining the occurrence of ping-pong caused by the repetition of cell reselection between a first cell and a second cell on the basis of the information on ping-pong detection standards; and adjusting the priority of either cell according to the result of the determination.

US2014/0274063A1 provides a system and method for mitigating ping-pong handovers and cell reselections. In one aspect, the system and method are configured to detect a plurality of cell changes by a mobile device, determine occurrence of at least one cell more than once in the detected plurality of cell changes, and apply one or more scaling factors to one or more parameters related to cell changes based on determination.

WO2006/096036A1 provides a method and apparatus for enabling a user equipment (UE) to perform accurate and efficient cell reselection in a cellular mobile communications system. If reselection to the same cell is repeated, the UE releases itself from a high-speed UE state or excludes the number of reselections to the same cell for the number of cell changes counted for a duration set for deciding as to the high-speed UE state, according to a ping-pong duration threshold and a ping-pong occurrence number threshold.

### SUMMARY

The invention is set out in the appended claims. Embodiments of the present disclosure provide a method and device for cell reselection, as well as a corresponding computer program product. The technical solutions are as follows.

According to a first aspect of embodiments of the present disclosure, there is provided a method for cell reselection, including:
upon a mobile terminal residing in a current serving cell, determining whether a neighboring cell meets a cell reselection condition;
upon the neighboring cell meeting the cell reselection condition, obtaining cell reselection information corresponding to the neighboring cell;
   determining whether the cell reselection information matches a history ping-pong reselection record, wherein the cell reselection information includes at least: a current cell reselection time, identification of the current serving cell; identification of the neighboring cell; and a reason for the cell reselection, and each history ping-pong reselection record includes at least: a history cell reselection time corresponding to the ping-pong reselection record; identification of a source cell corresponding to the ping-pong reselection record; identification of a destination cell corresponding to the ping-pong reselection record; and a reason for the cell reselection corresponding to the ping-pong reselection record,
   wherein the step of determining whether the cell reselection information matches a history ping-pong reselection record, comprises:
      upon the cell reselection information and any one of the history ping-pong reselection records meeting a matching condition, determining that the cell reselection information matches the any one of the history ping-pong reselection records;
      wherein the matching condition comprises:
         the identification of the current serving cell matches the identification of the source cell corresponding to the any one of the history ping-pong reselection records;
         the identification of the neighboring cell matches the identification of the destination cell corresponding to the any one of the history ping-pong reselection records; and
         the reason for the cell reselection matches the reason for the cell reselection corresponding to the any one of the history ping-pong reselection records;
upon the cell reselection information matching any one of history ping-pong reselection records, determining whether a time difference between the current cell reselection time and the history cell reselection time corresponding to the one history ping-pong reselection record is greater than a preset time difference;
upon the difference between the current cell reselection time and the history cell reselection time corresponding to the one history ping-pong reselection record being greater than the preset time difference, reselecting the neighboring cell as a current serving cell so as to reside in the neighboring cell;
after reselecting the neighboring cell as the current serving cell, extending the preset time difference; and
recording the cell reselection information into the history ping-pong reselection records to update the history ping-pong reselection records.

Optionally, upon there being at least two neighboring cells which meet the cell reselection condition, the obtaining of the cell reselection information corresponding to the neighboring cell includes:
according to a reselection priority and/or a signal quality of individual ones of the at least two neighboring cells, determining a target neighboring cell among the at least two neighboring cells; and
obtaining the cell reselection information corresponding to the target neighboring cell.

According to a second aspect of embodiments of the present disclosure, there is provided a device for cell reselection, including:
a first determination module configured to, upon a mobile terminal residing in a current serving cell, determine whether a neighboring cell meets a cell reselection condition;
an obtaining module configured to, upon the neighboring cell meeting the cell reselection condition, obtain cell reselection information corresponding to the neighboring cell;
a second determination module configured to determine whether the cell reselection information matches a history ping-pong reselection record, wherein the cell reselection information includes at least: a current cell reselection time; identification of the current serving cell; identification of the neighboring cell; and a reason for the cell reselection, and each history ping-pong reselection record includes at least: a history cell reselection time corresponding to the ping-pong reselection record; identification of a source cell corresponding to the ping-pong reselection record, identification of a destination cell corresponding to the ping-pong reselection record, and a reason for the cell reselection corresponding to the ping-pong reselection record;
a second determination submodule configured to, upon the cell reselection information and any one of the history ping-pong reselection records meeting a matching condition, determine that the cell reselection information matches the any one of the history ping-pong reselection records;
the matching condition includes:
   the identification of the current serving cell matches the identification of the source cell corresponding to the any one of the history ping-pong reselection records;
   the identification of the neighboring cell matches the identification of the destination cell corresponding to the any one of the history ping-pong reselection records; and
   the reason for the cell reselection matches the reason for the cell reselection corresponding to the any one of the history ping-pong reselection records;
   a third determination module configured to, upon the cell reselection information matching any one of history ping-pong reselection records, determine whether a time difference between the current cell reselection time and the history cell reselection time corresponding to the one history ping-pong reselection record is greater than a preset time difference;
   a selection module configured to, upon the time difference between the current cell reselection time and the history cell reselection time corresponding to the one history ping-pong reselection record being greater than the preset time difference, reselect the neighboring cell as a current serving cell so as to reside in the neighboring cell;
   a process module configured to, after the neighboring cell is reselected as the current serving cell, extend the preset time difference; and
   a recording module configured to record the cell reselection information into the history ping-pong reselection records to update the history ping-pong reselection records.

Optionally, the obtaining module includes:
a first determination submodule configured to, upon there being at least two neighboring cells which meet the cell reselection condition, according to a reselection priority and/or a signal quality of individual ones of the at least two neighboring cells, determine a target neighboring cell among the at least two neighboring cells; and
a second obtaining submodule configured to obtain the cell reselection information corresponding to the target neighboring cell.

According to a third aspect of the embodiment of the present disclosure, there is provided a computer program product comprising instructions stored in a non-transitory computer-readable storage medium, said instructions, when being executed on a processor of a cell reselection device, causes the cell reselection device to perform the steps of any one of the above methods.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

The technical solutions provided by embodiments of the present disclosure may have the following advantageous effects.

In the technical solutions provided by embodiments of the present disclosure, if a neighboring cell meets a cell reselection condition, by obtaining cell reselection information corresponding to the neighboring cell, whether the cell reselection information corresponding to the neighboring cell matches a pre-recorded history ping-pong reselection record can be determined; if the cell reselection information matches any one of the history ping-pong reselection records, it is indicated that if the neighboring cell is reselected, ping-pong reselection may occur, and thus it is needed to further determine whether a time difference between the current cell reselection time and the history cell reselection time corresponding to the one history ping-pong reselection record is greater than a preset time difference; if the time difference is greater than the preset time difference, it is indicated that even the current selection is a ping-pong reselection, the current selection is far from the previous ping-pong reselection time, and cannot be deemed as frequent ping-pong reselection and may not result in too much consumption of electricity energy, and thus the neighboring cell can be reselected as the current serving cell, and a terminal can reside in the neighboring cell to make the neighboring cell provide service to users. By such determination of whether the cell reselection information matches a history ping-pong reselection record and comparison of the cell reselection time difference, the frequency for the ping-pong cell reselections can be effectively lowered, the consumption of the electricity energy of terminals due to the ping-pong reselections can be reduced, and thereby the standby time can be extended to some extent and terminal usage experience of users can be improved.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing an example of a method for cell reselection.
Fig. 2 is a flowchart showing a method for cell reselection according to an exemplary embodiment.
Fig. 3 is a flowchart showing another example of a method for cell.
Fig. 4 is a block diagram showing an example of a device for cell reselection
Fig. 5 is a block diagram showing a device for cell reselection according to an exemplary embodiment.
Fig. 6 is a block diagram showing another example of a device for cell reselection.
Fig. 7 is a block diagram showing another example of a device for cell reselection.
Fig. 8 is a block diagram showing another device for cell reselection according to an exemplary embodiment.
Fig. 9 is a block diagram applicable for a device for cell reselection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

At present, ping-pong reselection phenomenon often occurs during cell reselection due to improper configuration of network reselection parameters. For example, when a terminal is residing in a cell A, the terminal may select a cell B according to current cell reselection parameters. When the terminal is residing in the cell B, the terminal may select the cell A again according to the cell reselection parameters. Such frequent switching between two cells is referred to as the ping-pong reselection. The ping-pong reselection will result in high standby current of the terminal, and thereby influence the standby time of the terminal and user experience. Although some methods to avoid ping-pong reselection are described in the background section, improved methods to solve ping-pong reselection are required.

In order to solve the above technical problem, an embodiment of the present disclosure provides a method for cell reselection. The method can be applied in a cell reselection program, system or device, and can be performed by a terminal such as a mobile phone.

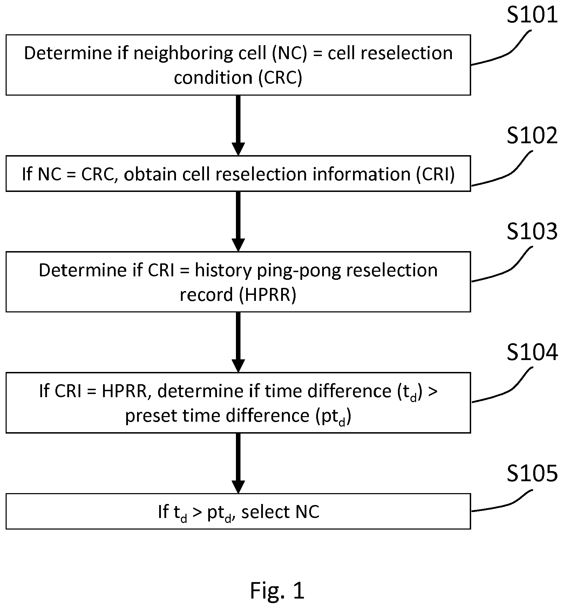

Fig. 1 is a flowchart showing a method for cell reselection according to an exemplary embodiment.

As shown in Fig. 1, the method includes steps S101 to S105.

In step S101, if the terminal is residing in a current serving cell, whether a neighboring cell meets a cell reselection condition is determined.

There may be one or more neighboring cells (usually six neighboring cells for a cellular network), and there may be one or more neighboring cells that meet a cell reselection condition.

In step S102, if the neighboring cell meets the cell reselection condition, cell reselection information corresponding to the neighboring cell is obtained.

In step S103, whether the cell reselection information matches a history ping-pong reselection record is determined. The cell reselection information includes at least a current cell reselection time, and each history ping-pong reselection record includes at least a history cell reselection time corresponding to the ping-pong reselection record.

There may be one or more the history ping-pong reselection records, and each history ping-pong reselection record may include not only the history cell reselection time corresponding to the history ping-pong reselection record, but also identification of a source cell before the reselection which is corresponding to the ping-pong reselection record, identification of a destination cell after the reselection which is corresponding to the ping-pong reselection record, and the reason for the reselection and the like. Rather, the cell reselection information may also include the above information.

In step S104, if the cell reselection information matches any one of history ping-pong reselection records, whether a difference between the current cell reselection time and the history cell reselection time corresponding to the one history ping-pong reselection record is greater than a preset time difference is determined.

If the cell reselection information matches any one of history ping-pong reselection records, it is indicated that if the neighboring cell is reselected, ping-pong reselection may occur. That is to say, if the neighboring cell is reselected, the current selection and a second cell reselection in any one ping-pong reselection record may form a ping-pong selection, or if the neighboring cell is reselected, according to the any one ping-pong reselection record, a previous serving cell may be reselected after the reselection of the neighboring cell and thereby a ping-pong reselection may occur. For example, if the any one ping-pong record indicates a selection of a cell B when a terminal is residing in a cell A (this can be considered as the first cell reselection in the any one ping-pong reselection record), and a selection of the cell A when the terminal is residing in the cell B (this can be considered as the second cell reselection in the any one ping-pong reselection record). If the current serving cell is the cell A, the neighboring cell B meets the cell reselection condition and the cell reselection information corresponding to the neighboring cell B matches the ping-pong reselection record, the reselection of the cell B and the reselection of the cell A when the terminal is residing in the cell B may form a ping-pong reselection, or according to the any one ping-pong reselection record, if the cell B is reselected, the terminal may select the cell A again and thus ping-pong reselection may occur.

In order to make the determination result of the ping-pong reselection more accurate, the history ping-pong reselection records may include several most recent reselection records. For example, the most recent reselection record may be taken as the comparison object. Thus, if the ping-pong reselection records indicates a selection of the cell B when the terminal is residing in the cell A and a selection of the cell A when the terminal is residing in the cell B, the time when the terminal re-residing in the cell A is contiguous to the time when the terminal is residing in the current serving cell in step S101, and the two times match each other, after the cell B is reselected, the selection of the cell B when the terminal is residing in the cell A and the second cell reselection (i.e., the selection of the cell A when the terminal is residing in the cell B) in the ping-pong reselection record form a ping-pong reselection.

Further, the history ping-pong reselection records may include various different ping-pong reselection records. No matter how many kinds of ping-pong reselection records are included in the history ping-pong reselection records, the ping-pong reselection records may include a ping-pong reselection record which indicates a selection of the cell B when the terminal is residing in the cell A and a selection of the cell A (again) when the terminal is residing in the cell B, and a ping-pong reselection record which indicates a selection of a cell D when the terminal is residing in a cell C and a selection of the cell C (again) when the terminal is residing in the cell D, and so on.

The preset time difference may be the shortest ping-pong reselection time interval during a ping-pong cell reselection procedure. For example, if the ping-pong reselection procedure is: the cell A-the cell B-the cell A, the preset time difference may be the shortest time of the ping-pong reselection procedure which starts from the time point when the terminal resides in the cell A, through the time when the terminal switches from the cell A to the cell B and then switches from the cell B to the cell A.

Or, the preset time different time may be customized.

Also, the preset time different may be continuously increased.

In step S105, if the time difference between the current cell reselection time and the history cell reselection time corresponding to the one history ping-pong reselection record is greater than the preset time difference, the neighboring cell is reselected as a current serving cell so as to reside in the neighboring cell.

In the embodiment, if a neighboring cell meets a cell reselection condition, by obtaining cell reselection information corresponding to the neighboring cell, whether the cell reselection information corresponding to the neighboring cell matches a pre-recorded history ping-pong reselection record can be determined; if the cell reselection information matches any one of the history ping-pong reselection records, it is indicated that if the neighboring cell is reselected, ping-pong reselection may occur, and thus it is needed to further determine whether a time difference between the current cell reselection time and the history cell reselection time corresponding to the one history ping-pong reselection record is greater than a preset time difference; if the time difference is greater than the preset time difference, it is indicated that even the current selection is a ping-pong reselection, the current selection is far from the previous ping-pong reselection time, and cannot be deemed as frequent ping-pong reselection and may not result in too much consumption of electricity energy, and thus the neighboring cell can be reselected as the current serving cell, and a terminal can reside in the neighboring cell to make the neighboring cell provide service to users. By such determination of whether the cell reselection information matches a history ping-pong reselection record and comparison of the cell reselection time difference, the frequency for the ping-pong cell reselections can be effectively lowered, the consumption of the electricity energy of terminals due to the ping-pong reselections can be reduced, and thereby the standby time can be extended to some extent and terminal usage experience of users can be improved.

In addition, if the time difference between the current cell reselection time and the history cell reselection time corresponding to the one history ping-pong reselection record is not greater than the preset time difference, according to the above explanations, if the neighboring cell is reselected as the current serving cell, the current cell reselection and the second cell reselection in the any one ping-pong reselection record may form a ping-pong reselection which occurs in a short time (from a previous ping-pong reselection), or according to the any one ping-pong reselection record, after the neighboring cell is reselected, the previous serving cell may be selected again, and thus continuous ping-pong reselections may occur within a short time period and consequently, electricity energy may be greatly consumed. Under such condition, the neighboring cell may not be reselected at the moment, and the terminal may continue to reside in the current serving cell.

The steps in the above embodiment may be performed continuously, or periodically.

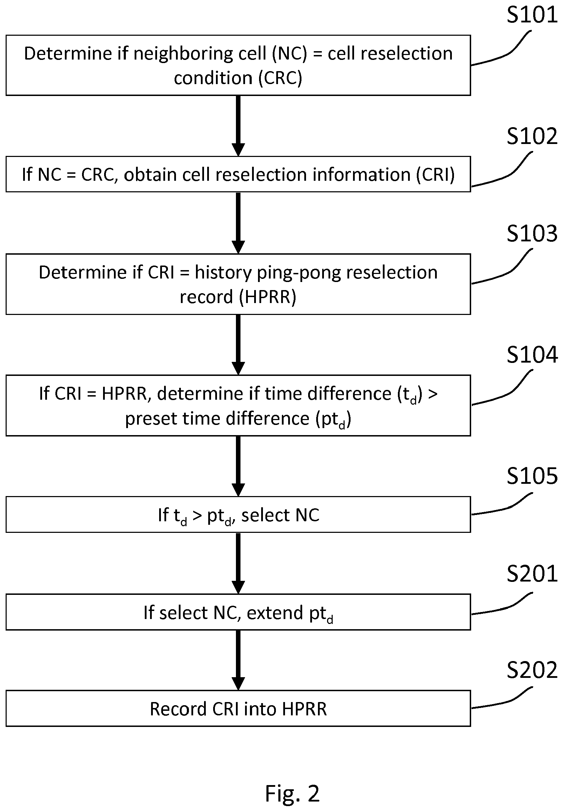

Fig. 2 is a flowchart showing another method for cell reselection according to an exemplary embodiment.

As shown in Fig. 2, according to an embodiment, the above method in Fig. 1 may further include steps S201 and S202.

In step S201, after the neighboring cell is reselected as the current serving cell, the preset time difference is extended.

In step S202, the cell reselection information is recorded into the history ping-pong reselection records to update the history ping-pong reselection records.

After the neighboring cell is reselected as the current serving cell, the preset time difference can be extended, so as to further avoid ping-pong cell reselections which repeatedly occur within a short time period. For example, each time after steps S101 to S104 are performed, if it is determined that the time difference between the current cell reselection time and the history cell reselection time corresponding to the one history ping-pong reselection record is greater than the preset time difference, the preset time difference may be extended up to two or three times of the old preset time difference.

After the cell reselection information is recorded into the history ping-pong reselection records, the history ping-pong reselection records can be updated, so that the history ping-pong reselection records can be enriched, which is helpful for subsequent determination of whether the cell reselection corresponding to the cell reselection information belongs to a ping-pong reselection according to the enriched history ping-pong reselection records.

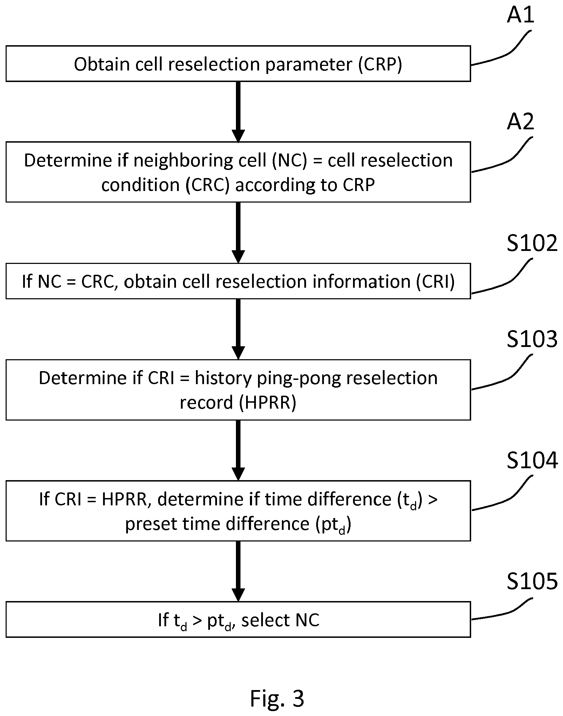

Fig. 3 is a flowchart showing another method for cell reselection according to an exemplary embodiment.

As shown in Fig. 3, according to an embodiment, the step S101 in Fig. 1 may include steps A1 and A2.

In step A1, a cell reselection parameter is obtained.

In step A2, whether the neighboring cell meets the cell reselection condition is determined according to the cell reselection parameter.

In order to determine whether the neighboring cell meets the cell reselection condition, a cell reselection parameter may be obtained automatically, and then whether the neighboring cell meets the cell reselection condition can be determined according to the cell reselection parameter.

According to an embodiment, the step A1 as shown in Fig. 3 may be implemented as follows:
receiving system information sent from a base station of the current serving cell, wherein the system information includes at least one of a reselection priority of the current serving cell, a minimum access level of the current serving cell, a reselection priority of the neighboring cell, and a minimum access level of the neighboring cell, wherein different cells may have different minimum access levels.

The reselection priority of the current serving cell and the minimum access level of the current serving cell may be carried in a message 3 in the system information sent from a base station of the current serving cell, and the reselection priority of the neighboring cell and the minimum access level of the neighboring cell may be carried in a message 5 in the system information sent from the base station of the current serving cell.

The function of the minimum access level is to avoid access of a mobile station to a system under a very low receiving signal level (the communication quality after the access usually cannot ensure normal communication procedures), which may result in poor communication qualities provided to users and unnecessary wastes of wireless resources of networks. According to provisions of GSM system, if a mobile station needs to access a network, the receiving level of the mobile station needs to be greater than a threshold level, i.e., the minimum receiving level which allows the mobile station to access.

Alternatively or additionally, step A1 as shown in Fig. 3 may be implemented as follows:
measuring signal qualities of the current serving cell and the neighboring cell, wherein each signal quality includes at least one of a current signal level, a reference signal receiving power (RSRP) and a reference signal receiving quality (RSRQ).

The terminal may measure the signal quality of the current serving cell according to a paging message sent from the base station of the current serving cell or network signals. Similarly, the terminal may measure the signal quality of the neighboring cell in the same way.

According to an embodiment, the step A2 shown in Fig. 3 may be implemented as follows:
if the cell reselection parameter meets a preset condition, determining that the neighboring cell meets the cell reselection condition;
the preset condition may include:
   the current signal level of the neighboring cell is not lower than the minimum access level of the neighboring cell and the reselection priority of the neighboring cell is higher than the reselection priority of the current serving cell; or
   a signal level corresponding to the reference signal receiving power of the neighboring cell is not lower than the minimum access level of the neighboring cell and the reselection priority of the neighboring cell is higher than the reselection priority of the current serving cell.

If the measured current signal level of the neighboring cell is not lower than the minimum access level of the neighboring cell or the signal level corresponding to the reference signal receiving power of the neighboring cell is not lower than the minimum access level of the neighboring cell, it is indicated that if the terminal resides in the neighboring cell, the communication quality will be good. Under such condition, the neighboring cell is qualified for reselection. Then, if the reselection priority of the neighboring cell is higher than the reselection priority of the current serving cell, it is further indicated that the neighboring cell is better for the terminal to reside in than the current serving cell, and thus it can be determined that the neighboring cell meets the cell reselection condition.

Alternatively, the preset condition may include: the current signal level of the current serving cell is lower than the minimum access level of the current serving cell and the reselection priority of the neighboring cell is lower than the reselection priority of the current serving cell.

If the current signal level of the current serving cell is lower than the minimum access level of the current serving cell, it is indicated that if the terminal continues to reside in the current serving cell, poor communication quality may be provided, which cannot meet communication requirements of users. Thus, even if the reselection priority of the neighboring cell is lower than the reselection priority of the current serving cell, it will be better for the terminal to reside in the neighboring cell than the current serving cell. Thus, under such condition, it can be determined that the neighboring cell meets the cell reselection condition. Also, under such condition, the current signal level of the neighboring cell should be not lower than the minimum access level of the neighboring cell.

The preset condition includes but not limited to the above conditions. For example, the preset condition may further include that the reselection priority of the neighboring cell is higher than a preset reselection priority, that the current signal level of the neighboring cell is higher than a preset signal level, that the signal quality of the neighboring cell is higher than a preset signal quality, and the like.

According to an embodiment, if there exist at least two neighboring cells which meet the cell reselection condition, the obtaining of the cell reselection information corresponding to the neighboring cell in step S102 as shown in Fig. 1 may include:
according to a reselection priority and/or a signal quality of individual ones of the at least two neighboring cells, determining a target neighboring cell among the at least two neighboring cells (for example, the neighboring cell which has a higher reselection priority and/or a higher signal quality can be selected among the at least two neighboring cells as the target neighboring cell.); and
obtaining the cell reselection information corresponding to the target neighboring cell.

If there exist at least two neighboring cells which meet the cell reselection condition, a target neighboring cell can be automatically identified among the at least two neighboring cells according to a reselection priority and/or a signal quality of individual ones of the at least two neighboring cells, and the cell reselection information corresponding to the target neighboring cell can be further obtained. Then, next determination can be performed. By doing so, ping-pong reselections within a short time period can be avoided.

According to an embodiment, the cell reselection information further includes at least one of:
identification of the current serving cell, identification of the neighboring cell, and a reason for the cell reselection.

The identification of the current serving cell may include an identity (i.e., cell ID) and a frequency of the current serving cell, the identification of the neighboring cell may include an identity (i.e., cell ID) and a frequency of the neighboring cell, and the reason for the reselection may include a low cell reselection priority, a high minimum cell access level, a poor cell signal quality and the like.

Each history ping-pong reselection record further includes at least one of:
identification of a source cell corresponding to the ping-pong reselection record, identification of a destination cell corresponding to the ping-pong reselection record, and a reason for the cell reselection corresponding to the ping-pong reselection record. The above information in each ping-pong reselection record may be record in a table form.

The identification of a source cell corresponding to each ping-pong reselection record may be identification of a cell which the terminal resides in before the first cell reselection in the ping-pong reselection record, and the identification of a destination cell corresponding to each ping-pong reselection record may be identification of a cell which the terminal resides in after the first cell reselection in the ping-pong reselection record.

For example, one ping-pong reselection record indicates that a terminal reselects a cell B when residing in a cell A, and then reselects the cell A when residing in the cell B (i.e., the terminal switches from the cell A to the cell B and then switches from the cell B to the cell A again). According to the ping-pong reselection record, the terminal resides in the cell A before the first cell reselection, and thus the identification of the source cell corresponding to the ping-pong reselection record is the identification of the cell A. After the first cell reselection, the terminal resides in the cell B, and accordingly the identification of the destination cell corresponding to the ping-pong reselection record is the identification of the cell B. The reason for the cell reselection corresponding to the ping-pong reselection record may be the reason why the terminal selects the cell B when residing in the cell A (the reasons for two cell reselections during a ping-pong reselection are basically the same, and thus the reason for the cell reselection may also be the reason why the terminal selects the cell A when residing in the cell B), and the history cell reselection time corresponding to the ping-pong reselection record is the time for the terminal to switch from the cell A to the cell B.

According to an embodiment, step S103 in Fig. 1 may be implemented as follows:
if the cell reselection information and any one of the history ping-pong reselection records meet a matching condition, determining that the cell reselection information matches the any one of the history ping-pong reselection records.

The matching condition includes:
the identification of the current serving cell matches the identification of the source cell corresponding to the any one of the history ping-pong reselection records;
the identification of the neighboring cell matches the identification of the destination cell corresponding to the any one of the history ping-pong reselection records; and
the reason for the cell reselection matches the reason for the cell reselection corresponding to the any one of the history ping-pong reselection records.

The matching of the identification of the current serving cell and the identification of the source cell corresponding to the any one of the history ping-pong reselection records may include that the identification of the current serving cell is the same as the identification of the source cell corresponding to the any one of the history ping-pong reselection records, i.e., the ID (cell ID) and frequency of the current serving cell are the same as the ID and the frequency of the source cell corresponding to the any one of the history ping-pong reselection records, respectively.

The matching of the identification of the neighboring cell and the identification of the destination cell corresponding to the any one of the history ping-pong reselection records may include that the identification of the neighboring cell is the same as the identification of the destination cell corresponding to the any one of the history ping-pong reselection records, i.e., the ID (cell ID) and frequency of the neighboring cell are the same as the ID and the frequency of the destination cell corresponding to the any one of the history ping-pong reselection records, respectively.

The matching of the reason for the cell reselection and the reason for the cell reselection corresponding to the any one of the history ping-pong reselection records may refer to that the reason for the cell reselection is the same as the reason for the cell reselection corresponding to the any one of the history ping-pong reselection records.

For example, one ping-pong reselection record indicates that a terminal reselects a cell D when residing in a cell C, and then reselects the cell C when residing in the cell D (i.e., the terminal switches from the cell C to the cell D and then switches from the cell D to the cell C again). The identification (i.e., the ID) corresponding to the cell C is M, and the frequency corresponding to the cell C is N. The identification (i.e., the ID) corresponding to the cell D is P, and the frequency corresponding to the cell D is Q. The reason for the cell reselection corresponding to the ping-pong reselection record is that the reselection priority of the current cell is low. Accordingly, the source cell and the destination cell corresponding to the ping-pong reselection record are the cell C and the cell D, respectively. Thus, if the current serving cell is the cell C having an ID of M and a frequency of N, a neighboring cell is the cell D having an ID of P and a frequency of Q, and a reason for the cell reselection is that the cell C has a low reselection priority, it is indicated that the cell reselection information corresponding to the cell C which the terminal currently resides in matches the ping-pong reselection record.

Correspondingly to the above methods for cell reselection provided by embodiments of the present disclosure, an embodiment of the present disclosure further provides a device for cell reselection.

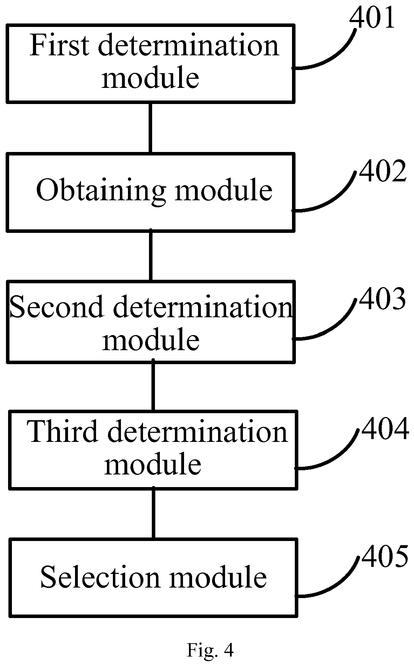

Fig. 4 is a block diagram showing a device for cell reselection according to an exemplary embodiment.

As shown in Fig. 4, the device includes a first determination module 401, an obtaining module 402, a second determination module 403, a third determination module 404, and a selection module 405.

The first determination module 401 is configured to, if reside in a current serving cell, determine whether a neighboring cell meets a cell reselection condition.

The obtaining module 402 is configured to, if the neighboring cell meets the cell reselection condition, obtain cell reselection information corresponding to the neighboring cell.

The second determination module 403 is configured to determine whether the cell reselection information matches a history ping-pong reselection record, wherein the cell reselection information includes at least a current cell reselection time, and each history ping-pong reselection record includes at least a history cell reselection time corresponding to the ping-pong reselection record.

The third determination module 404 is configured to, if the cell reselection information matches any one of history ping-pong reselection records, determine whether a time difference between the current cell reselection time and the history cell reselection time corresponding to the one history ping-pong reselection record is greater than a preset time difference.

The selection module 405 is configured to, if the time difference between the current cell reselection time and the history cell reselection time corresponding to the one history ping-pong reselection record is greater than the preset time difference, reselect the neighboring cell as a current serving cell so as to reside in the neighboring cell.

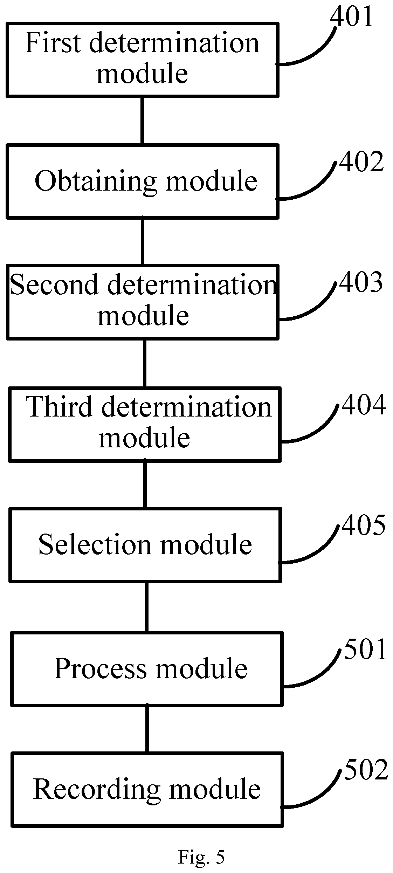

Fig. 5 is a block diagram showing another device for cell reselection according to an exemplary embodiment.

As shown in Fig. 5, according to an embodiment, the device as shown in Fig. 4 may further include a process module 501 and a recording module 502.

The process module 501 is configured to, after the neighboring cell is reselected as the current serving cell, extend the preset time difference.

The recording module 502 is configured to record the cell reselection information into the history ping-pong reselection records to update the history ping-pong reselection records.

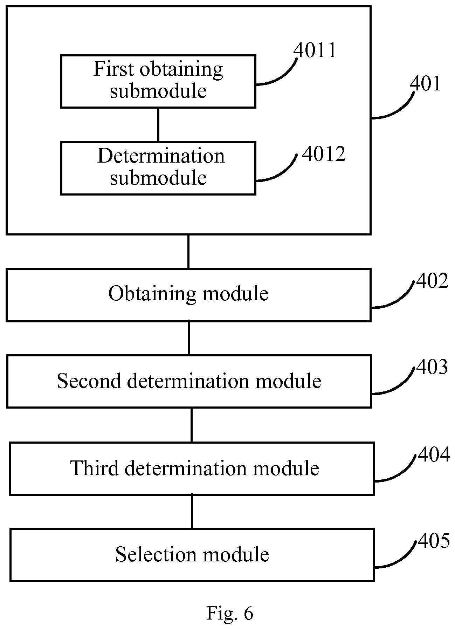

Fig. 6 is a block diagram showing another device for cell reselection according to an exemplary embodiment.

As shown in Fig. 6, according to an embodiment, the first determination module 401 in Fig. 4 may include a first obtaining submodule 4011 and a determination submodule 4012.

The first obtaining submodule 4011 is configured to obtain a cell reselection parameter.

The determination submodule 4012 is configured to determine whether the neighboring cell meets the cell reselection condition according to the cell reselection parameter.

According to an embodiment, the first obtaining submodule 4011 may include a receiving unit and/or a measurement unit.

The receiving unit is configured to receive system information sent from a base station of the current serving cell, wherein the system information includes at least one of a reselection priority of the current serving cell, a minimum access level of the current serving cell, a reselection priority of the neighboring cell, and a minimum access level of the neighboring cell.

The measurement unit is configured to measure signal qualities of the current serving cell and the neighboring cell, wherein each signal quality includes at least one of a current signal level, a reference signal receiving power and a reference signal receiving quality.

According to an embodiment, the determination submodule 4012 may include a determination unit.

The determination unit is configured to, if the cell reselection parameter meets a preset condition, determine that the neighboring cell meets the cell reselection condition.

The preset condition includes:
the current signal level of the neighboring cell is not lower than the minimum access level of the neighboring cell and the reselection priority of the neighboring cell is higher than the reselection priority of the current serving cell; or
a signal level corresponding to the reference signal receiving power of the neighboring cell is not lower than the minimum access level of the neighboring cell and the reselection priority of the neighboring cell is higher than the reselection priority of the current serving cell; or
the current signal level of the current serving cell is lower than the minimum access level of the current serving cell and the reselection priority of the neighboring cell is lower than the reselection priority of the current serving cell.

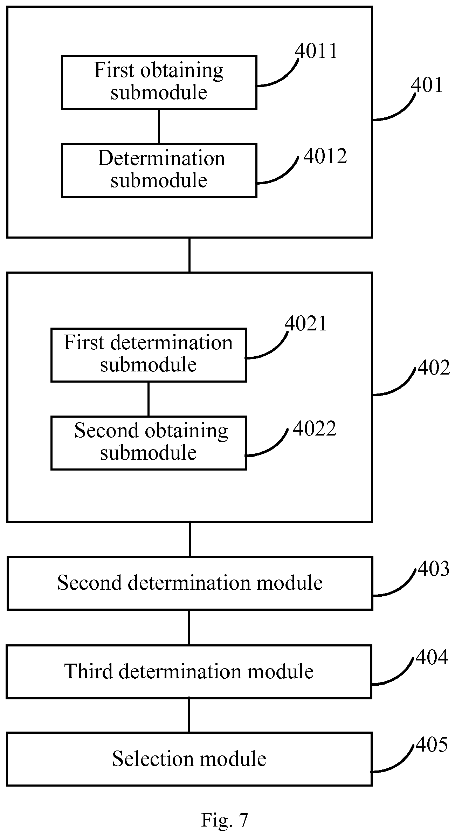

Fig. 7 is a block diagram showing another device for cell reselection according to an exemplary embodiment.

As shown in Fig. 7, according to an embodiment, the obtaining module 402 in Fig. 6 may include a first determination submodule 4021 and a second obtaining submodule 4022.

The first determination submodule 4021 is configured to, if there exist at least two neighboring cells which meet the cell reselection condition, according to a reselection priority and/or a signal quality of individual ones of the at least two neighboring cells, determine a target neighboring cell among the at least two neighboring cells.

The second obtaining submodule 4022 is configured to obtain the cell reselection information corresponding to the target neighboring cell.

According to an embodiment, the cell reselection information further includes at least one of:
identification of the current serving cell, identification of the neighboring cell, and a reason for the cell reselection.
each history ping-pong reselection record further includes at least one of:
   identification of a source cell corresponding to the ping-pong reselection record, identification of a destination cell corresponding to the ping-pong reselection record, and a reason for the cell reselection corresponding to the ping-pong reselection record.

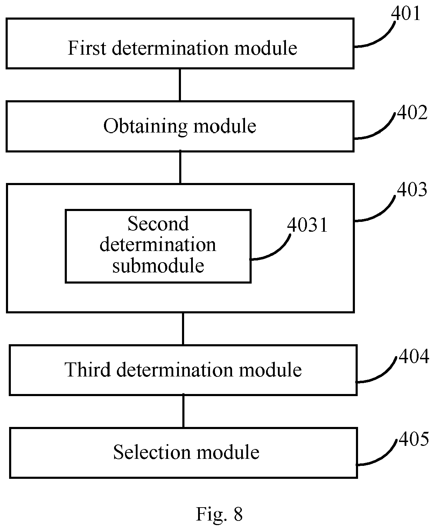

Fig. 8 is a block diagram showing another device for cell reselection according to an exemplary embodiment.

As shown in Fig. 8, according to an embodiment, the second determination module 403 in Fig. 4 may include a second determination submodule 4031.

The second determination submodule 4031 is configured to, if the cell reselection information and any one of the history ping-pong reselection records meet a matching condition, determine that the cell reselection information matches the any one of the history ping-pong reselection records.

The matching condition includes:
the identification of the current serving cell matches the identification of the source cell corresponding to the any one of the history ping-pong reselection records;
the identification of the neighboring cell matches the identification of the destination cell corresponding to the any one of the history ping-pong reselection records; and
the reason for the cell reselection matches the reason for the cell reselection corresponding to the any one of the history ping-pong reselection records.

According to a third aspect of embodiments of the present disclosure, there is provided a device for cell reselection, including:
a processor; and
a memory for storing instructions executable by the processor;
wherein the processor is configured to:
   if reside in a current serving cell, determine whether a neighboring cell meets a cell reselection condition;
   if the neighboring cell meets the cell reselection condition, obtain cell reselection information corresponding to the neighboring cell;
   determine whether the cell reselection information matches a history ping-pong reselection record, wherein the cell reselection information includes at least a current cell reselection time, and each history ping-pong reselection record includes at least a history cell reselection time corresponding to the ping-pong reselection record;
   if the cell reselection information matches any one of history ping-pong reselection records, determine whether a time difference between the current cell reselection time and the history cell reselection time corresponding to the one history ping-pong reselection record is greater than a preset time difference; and
   if the time difference between the current cell reselection time and the history cell reselection time corresponding to the one history ping-pong reselection record is greater than the preset time difference, reselect the neighboring cell as a current serving cell so as to reside in the neighboring cell.

According to an embodiment, the processor is further configured to:
after reselect the neighboring cell as the current serving cell, extend the preset time difference; and
record the cell reselection information into the history ping-pong reselection records to update the history ping-pong reselection records.

According to an embodiment, the processor is configured to:
obtain a cell reselection parameter; and
determine whether the neighboring cell meets the cell reselection condition according to the cell reselection parameter.

According to an embodiment, the processor is configured to:
receive system information sent from a base station of the current serving cell, wherein the system information includes at least one of a reselection priority of the current serving cell, a minimum access level of the current serving cell, a reselection priority of the neighboring cell, and a minimum access level of the neighboring cell; and/or
measure signal qualities of the current serving cell and the neighboring cell, wherein each signal quality includes at least one of a current signal level, a reference signal receiving power and a reference signal receiving quality.

According to an embodiment, the processor is further configured to:
if the cell reselection parameter meets a preset condition, determine that the neighboring cell meets the cell reselection condition,
wherein the preset condition includes:
   the current signal level of the neighboring cell is not lower than the minimum access level of the neighboring cell and the reselection priority of the neighboring cell is higher than the reselection priority of the current serving cell; or
   a signal level corresponding to the reference signal receiving power of the neighboring cell is not lower than the minimum access level of the neighboring cell and the reselection priority of the neighboring cell is higher than the reselection priority of the current serving cell; or
   the current signal level of the current serving cell is lower than the minimum access level of the current serving cell and the reselection priority of the neighboring cell is lower than the reselection priority of the current serving cell.

According to an embodiment, the processor is configured to:
if there exist at least two neighboring cells which meet the cell reselection condition, according to a reselection priority and/or a signal quality of individual ones of the at least two neighboring cells, determine a target neighboring cell among the at least two neighboring cells; and
obtain the cell reselection information corresponding to the target neighboring cell.

According to an embodiment, the cell reselection information further includes at least one of:
identification of the current serving cell, identification of the neighboring cell, and a reason for the cell reselection; and
each history ping-pong reselection record further includes at least one of:
   identification of a source cell corresponding to the ping-pong reselection record, identification of a destination cell corresponding to the ping-pong reselection record, and a reason for the cell reselection corresponding to the ping-pong reselection record.

According to an embodiment, the processor is configured to:
if the cell reselection information and any one of the history ping-pong reselection records meet a matching condition, determine that the cell reselection information matches the any one of the history ping-pong reselection records;
the matching condition includes:
   the identification of the current serving cell matches the identification of the source cell corresponding to the any one of the history ping-pong reselection records;
   the identification of the neighboring cell matches the identification of the destination cell corresponding to the any one of the history ping-pong reselection records; and
   the reason for the cell reselection matches the reason for the cell reselection corresponding to the any one of the history ping-pong reselection records.

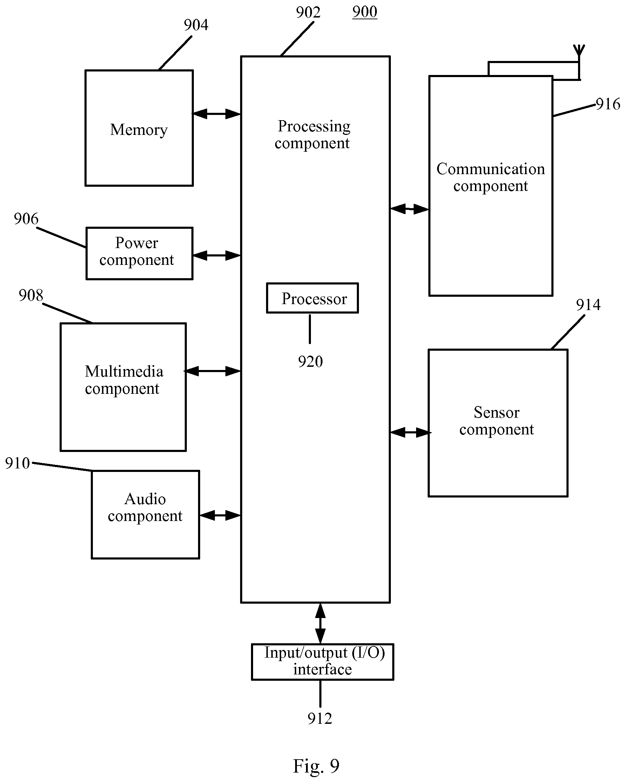

Fig. 9 is a block diagram showing a device 900 for cell reselection according to an exemplary embodiment. The device may be applied in a terminal device. For example, the device 900 may be a mobile phone, a computer, a digital broadcast terminal, a messaging device, a gaming console, a tablet, a medical device, exercise equipment, a personal digital assistant, and the like.

The device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium, when instructions in the storage medium are executed by the processor in the above device 900, the device 900 is caused to perform a method for cell reselection, including:
if residing in a current serving cell, determining whether a neighboring cell meets a cell reselection condition;
if the neighboring cell meets the cell reselection condition, obtaining cell reselection information corresponding to the neighboring cell;
determining whether the cell reselection information matches a history ping-pong reselection record, wherein the cell reselection information includes at least a current cell reselection time, and each history ping-pong reselection record includes at least a history cell reselection time corresponding to the ping-pong reselection record;
if the cell reselection information matches any one of history ping-pong reselection records, determining whether a time difference between the current cell reselection time and the history cell reselection time corresponding to the one history ping-pong reselection record is greater than a preset time difference; and
if the time difference between the current cell reselection time and the history cell reselection time corresponding to the one history ping-pong reselection record is greater than the preset time difference, reselecting the neighboring cell as a current serving cell so as to reside in the neighboring cell.

According to an embodiment, the method further includes:
after reselecting the neighboring cell as the current serving cell, extending the preset time difference; and
recording the cell reselection information into the history ping-pong reselection records to update the history ping-pong reselection records.

According to an embodiment, the determining whether the neighboring cell meets the cell reselection condition if residing in the current serving cell, includes:
obtaining a cell reselection parameter; and
determining whether the neighboring cell meets the cell reselection condition according to the cell reselection parameter.

According to an embodiment, the obtaining the cell reselection parameter, includes:
receiving system information sent from a base station of the current serving cell, wherein the system information includes at least one of a reselection priority of the current serving cell, a minimum access level of the current serving cell, a reselection priority of the neighboring cell, and a minimum access level of the neighboring cell; and/or
measuring signal qualities of the current serving cell and the neighboring cell, wherein each signal quality includes at least one of a current signal level, a reference signal receiving power and a reference signal receiving quality.

According to an embodiment, the determining whether the neighboring cell meets the cell reselection condition according to the cell reselection parameter, includes:
if the cell reselection parameter meets a preset condition, determining that the neighboring cell meets the cell reselection condition,
the preset condition includes:
   the current signal level of the neighboring cell is not lower than the minimum access level of the neighboring cell and the reselection priority of the neighboring cell is higher than the reselection priority of the current serving cell; or
   a signal level corresponding to the reference signal receiving power of the neighboring cell is not lower than the minimum access level of the neighboring cell and the reselection priority of the neighboring cell is higher than the reselection priority of the current serving cell; or
   the current signal level of the current serving cell is lower than the minimum access level of the current serving cell and the reselection priority of the neighboring cell is lower than the reselection priority of the current serving cell.

According to an embodiment, if there exist at least two neighboring cells which meet the cell reselection condition, the obtaining of the cell reselection information corresponding to the neighboring cell includes:
according to a reselection priority and/or a signal quality of individual ones of the at least two neighboring cells, determining a target neighboring cell among the at least two neighboring cells; and
obtaining the cell reselection information corresponding to the target neighboring cell.

According to an embodiment, the cell reselection information further includes at least one of:
identification of the current serving cell, identification of the neighboring cell, and a reason for the cell reselection; and
each history ping-pong reselection record further includes at least one of:
   identification of a source cell corresponding to the ping-pong reselection record, identification of a destination cell corresponding to the ping-pong reselection record, and a reason for the cell reselection corresponding to the ping-pong reselection record.

According to an embodiment, the determining whether the cell reselection information matches a history ping-pong reselection record, includes:
if the cell reselection information and any one of the history ping-pong reselection records meet a matching condition, determining that the cell reselection information matches the any one of the history ping-pong reselection records;
the matching condition includes:
   the identification of the current serving cell matches the identification of the source cell corresponding to the any one of the history ping-pong reselection records;
   the identification of the neighboring cell matches the identification of the destination cell corresponding to the any one of the history ping-pong reselection records; and
   the reason for the cell reselection matches the reason for the cell reselection corresponding to the any one of the history ping-pong reselection records.

### ANNEX TO THE DESCRIPTION

The following refer to the steps shown in Figs. 1 to 3.

S101: If reside in a current serving cell, determine whether a neighboring cell meets a cell condition.

S102: If the neighboring cell meets the cell reselection condition, obtain cell reselection information corresponding to the neighboring cell.

S103: Determine whether the cell reselection information matches a history ping-pong reselection record.

S104: If the cell reselection information matches any one of history ping-pong reselection records, determine whether a difference between the current cell reselection time and the history cell reselection time corresponding to the one history ping-pong reselection record is greater than a preset time difference.

S105: If the difference is greater than the preset time difference, reselect the neighboring cell as a current serving cell so as to reside in a neighboring cell.

S201: After reselect the neighboring cell as the current serving cell, extend the preset time difference.

S202: Record the cell reselection information into the history ping-pong reselection records to update the history ping-pong reselection records.
A1: Obtain a cell reselection parameter.
A2: Determine whether the neighboring cell meets the cell reselection condition according to the cell reselection parameter.

## Claims

1. A method for cell reselection, comprising:
upon a mobile terminal residing in a current serving cell, determining (S101) whether a neighboring cell meets a cell reselection condition;
upon the neighboring cell meeting the cell reselection condition, obtaining (S102) cell reselection information corresponding to the neighboring cell;
determining (S103) whether the cell reselection information matches a history ping-pong reselection record, wherein the cell reselection information comprises at least: a current cell reselection time; identification of the current serving cell; identification of the neighboring cell; and a reason for the cell reselection, and each history ping-pong reselection record comprises at least: a history cell reselection time corresponding to the ping-pong reselection record; identification of a source cell corresponding to the ping-pong reselection record; identification of a destination cell corresponding to the ping-pong reselection record; and a reason for the cell reselection corresponding to the ping-pong reselection record,
wherein the step of determining (SI03) whether the cell reselection information matches a history ping-pong reselection record, comprises:
upon the cell reselection information and any one of the history ping-pong reselection records meeting a matching condition, determining that the cell reselection information matches the any one of the history ping-pong reselection records;
wherein the matching condition comprises:
the identification of the current serving cell matches the identification of the source cell corresponding to the any one of the history ping-pong reselection records;
the identification of the neighboring cell matches the identification of the destination cell corresponding to the any one of the history ping-pong reselection records; and
the reason for the cell reselection matches the reason for the cell reselection corresponding to the any one of the history ping-pong reselection records;
upon the cell reselection information matching any one of history ping-pong reselection records, determining (SI04) whether a time difference between the current cell reselection time and the history cell reselection time corresponding to the one history ping-pong reselection record is greater than a preset time difference;
upon the time difference between the current cell reselection time and the history cell reselection time corresponding to the one history ping-pong reselection record being greater than the preset time difference, reselecting (S105) the neighboring cell as a current serving cell so as to reside in the neighboring cell;
after reselecting the neighboring cell as the current serving cell, extending (S201) the preset time difference; and
recording (S202) the cell reselection information into the history ping-pong reselection records to update the history ping-pong reselection records.

2. The method according to claim 1, wherein upon there being at least two neighboring cells which meet the cell reselection condition, the step of obtaining (S102) the cell reselection information corresponding to the neighboring cell comprises:
according to a reselection priority and/or a signal quality of individual ones of the at least two neighboring cells, determining a target neighboring cell among the at least two neighboring cells; and
obtaining the cell reselection information corresponding to the target neighboring cell.

3. A device (900) for cell reselection, comprising:
a first determination module (401) configured to, upon a mobile terminal residing in a current serving cell, determine whether a neighboring cell meets a cell reselection condition;
an obtaining module (402) configured to, upon the neighboring cell meeting the cell reselection condition, obtain cell reselection information corresponding to the neighboring cell;
a second determination module (403) configured to determine whether the cell reselection information matches a history ping-pong reselection record, wherein the cell reselection information comprises at least: a current cell reselection time; identification of the current serving cell; identification of the neighboring cell; and a reason for the cell reselection, and each history ping-pong reselection record comprises at least: a history cell reselection time corresponding to the ping-pong reselection record; identification of a source cell corresponding to the ping-pong reselection record; identification of a destination cell corresponding to the ping-pong reselection record; and a reason for the cell reselection corresponding to the ping-pong reselection record;
a second determination submodule (4031) configured to, upon the cell reselection information and any one of the history ping-pong reselection records meeting a matching condition, determine that the cell reselection information matches the any one of the history ping-pong reselection records;
wherein the matching condition comprises:
the identification of the current serving cell matches the identification of the source cell corresponding to the any one of the history ping-pong reselection records;
the identification of the neighboring cell matches the identification of the destination cell corresponding to the any one of the history ping-pong reselection records; and
the reason for the cell reselection matches the reason for the cell reselection
corresponding to the any one of the history ping-pong reselection records;
a third determination module (404) configured to, upon the cell reselection information matching any one of the history ping-pong reselection records, determine whether a time difference between the current cell reselection time and the history cell reselection time corresponding to the one history ping-pong reselection record is greater than a preset time difference;
a selection module (405) configured to, upon the time difference between the current cell reselection time and the history cell reselection time corresponding to the one history ping-pong reselection record being greater than the preset time difference, reselect the neighboring cell as a current serving cell so as to reside in the neighboring cell; and
a process module (501) configured to, after the neighboring cell is reselected as the current serving cell, extend the preset time difference; and
a recording module (502) configured to record the cell reselection information into the history ping-pong reselection records to update the history ping-pong reselection records.

4. The device according to claim 3, wherein the obtaining module (402) comprises:
a first determination submodule (4021) configured to, upon there being at least two neighboring cells which meet the cell reselection condition, according to a reselection priority and/or a signal quality of individual ones of the at least two neighboring cells, determine a target neighboring cell among the at least two neighboring cells; and
a second obtaining submodule (4022) configured to obtain the cell reselection information corresponding to the target neighboring cell.

5. A computer program product comprising instructions stored in a non-transitory computer-readable storage medium, said instructions, when executing on a processor (920) of a cell reselection device (900), causing the cell reselection device (900) to perform the steps of a method according to any one of claims 1 to 4.

## Patentansprüche

1. Verfahren zur Zellenneuauswahl, das Folgendes aufweist:
Bestimmen (S101), wenn sich ein Mobil-Endgerät in einer aktuellen Versorgungszelle befindet, ob eine Nachbarzelle eine Zellenneuauswahlbedingung erfüllt;
Beschaffen (S102) von Zellenneuauswahlinformationen, die der Nachbarzelle entsprechen, wenn die Nachbarzelle die Zellenneuauswahlbedingung erfüllt;
Bestimmen (S103), ob die Zellenneuauswahlinformationen mit einem historischen Pingpong-Neuauswahldatensatz übereinstimmen, wobei die Zellenneuauswahlinformationen wenigstens Folgendes aufweisen: eine aktuelle Zellenauswahlzeit; Identifikation der aktuellen Versorgungszelle; Identifikation der Nachbarzelle; und einen Grund für die Zellenneuauswahl, und wobei jeder historische Pingpong-Neuauswahldatensatz wenigstens Folgendes aufweist: eine historische Zellenneuauswahlzeit, die dem Pingpong-Neuauswahldatensatz entspricht; Identifikation einer Ausgangszelle, die dem Pingpong-Neuauswahldatensatz entspricht; Identifikation einer Zielzelle, die dem Pingpong-Neuauswahldatensatz entspricht; und einen Grund für die Zellenneuauswahl, der dem Pingpong-Neuauswahldatensatz entspricht,
wobei der Schritt des Bestimmens (S103), ob die Zellenneuauswahlinformationen mit einem historischen Pingpong-Neuauswahldatensatz übereinstimmen, Folgendes aufweist:
wenn die Zellenneuauswahlinformationen und jedweder der historischen Pingpong-Neuauswahldatensätze eine Übereinstimmungsbedingung erfüllen, Bestimmen, dass die Zellenneuauswahlinformationen mit dem jedweden der historischen Pingpong-Neuauswahldatensätze übereinstimmen;
wobei die Übereinstimmungsbedingung Folgendes aufweist:
die Identifikation der aktuellen Versorgungszelle stimmt mit der Identifikation der Ausgangszelle überein, die dem jedweden der historischen Pingpong-Neuauswahldatensätze entspricht;
die Identifikation der Nachbarzelle stimmt mit der Identifikation der Zielzelle überein, die dem jedweden der historischen Pingpong-Neuauswahldatensätze entspricht; und
der Grund für die Zellenneuauswahl stimmt mit dem Grund für die Zellenneuauswahl überein, der dem jedweden der historischen Pingpong-Neuauswahldatensätze entspricht;
wenn die Zellenneuauswahlinformationen mit jedwedem der historischen Pingpong-Neuauswahldatensätze übereinstimmen, Bestimmen (S104), ob eine Zeitdifferenz zwischen der aktuellen Zellenneuauswahlzeit und der historischen Zellenneuauswahlzeit, die dem einen historischen Pingpong-Neuauswahldatensatz entspricht, größer als eine voreingestellte Zeitdifferenz ist;
wenn die Zeitdifferenz zwischen der aktuellen Zellenneuauswahlzeit und der historischen Zellenneuauswahlzeit, die dem einen historischen Pingpong-Neuauswahldatensatz entspricht, größer als die voreingestellte Zeitdifferenz ist, Neuauswählen (S105) der Nachbarzelle als eine aktuelle Versorgungszelle, um sich in der Nachbarzelle zu befinden;
nach dem Wiederauswählen der Nachbarzelle als der aktuellen Versorgungszelle Verlängern (S201) der voreingestellten Zeitdifferenz; und
Aufzeichnen (S202) der Zellenneuauswahlinformationen in die historischen Pingpong-Neuauswahldatensätze zum Aktualisieren der historischen Pingpong-Neuauswahldatensätze.

2. Verfahren nach Anspruch 1, wobei, wenn es wenigstens zwei Nachbarzellen gibt, die die Zellenneuauswahlbedingung erfüllen, der Schritt des Beschaffens (S102) der Zellenneuauswahlinformationen, die der Nachbarzelle entsprechen, Folgendes aufweist:
gemäß einer Neuauswahlpriorität und/oder einer Signalgüte von einzelnen der wenigstens zwei Nachbarzellen Bestimmen einer Zielnachbarzelle unter den wenigstens zwei Nachbarzellen; und
Beschaffen der Zellenneuauswahlinformationen, die der Zielnachbarzelle entsprechen.

3. Vorrichtung (900) zur Zellenneuauswahl, die Folgendes aufweist:
ein erstes Bestimmungsmodul (401), das konfiguriert ist zum Bestimmen, wenn sich ein Mobil-Endgerät in einer aktuellen Versorgungszelle befindet, ob eine Nachbarzelle eine Zellenneuauswahlbedingung erfüllt;
ein Beschaffungsmodul (402), das konfiguriert ist zum Beschaffen von Zellenneuauswahlinformationen, die der Nachbarzelle entsprechen, wenn die Nachbarzelle die Zellenneuauswahlbedingung erfüllt;
ein zweites Bestimmungsmodul (403), das konfiguriert ist zum Bestimmen, ob die Zellenneuauswahlinformationen mit einem historischen Pingpong-Neuauswahldatensatz übereinstimmen, wobei die Zellenneuauswahlinformationen wenigstens Folgendes aufweisen: eine aktuelle Zellenauswahlzeit; Identifikation der aktuellen Versorgungszelle; Identifikation der Nachbarzelle; und einen Grund für die Zellenneuauswahl, und wobei jeder historische Pingpong-Neuauswahldatensatz wenigstens Folgendes aufweist: eine historische Zellenneuauswahlzeit, die dem Pingpong-Neuauswahldatensatz entspricht; Identifikation einer Ausgangszelle, die dem Pingpong-Neuauswahldatensatz entspricht; Identifikation einer Zielzelle, die dem Pingpong-Neuauswahldatensatz entspricht; und einen Grund für die Zellenneuauswahl, der dem Pingpong-Neuauswahldatensatz entspricht;
ein zweites Bestimmungsuntermodul (4031), das konfiguriert ist zum Bestimmen, wenn die Zellenneuauswahlinformationen und jedweder der historischen Pingpong-Neuauswahldatensätze eine Übereinstimmungsbedingung erfüllen, dass die Zellenneuauswahlinformationen mit dem jedweden der historischen Pingpong-Neuauswahldatensätze übereinstimmen;
wobei die Übereinstimmungsbedingung Folgendes aufweist:
die Identifikation der aktuellen Versorgungszelle stimmt mit der Identifikation der Ausgangszelle überein, die dem jedweden der historischen Pingpong-Neuauswahldatensätze entspricht;
die Identifikation der Nachbarzelle stimmt mit der Identifikation der Zielzelle überein, die dem jedweden der historischen Pingpong-Neuauswahldatensätze entspricht; und
der Grund für die Zellenneuauswahl stimmt mit dem Grund für die Zellenneuauswahl überein, der dem jedweden der historischen Pingpong-Neuauswahldatensätze entspricht;
ein drittes Bestimmungsmodul (404), das konfiguriert ist zum Bestimmen, wenn die Zellenneuauswahlinformationen mit jedwedem der historischen Pingpong-Neuauswahldatensätze übereinstimmen, ob eine Zeitdifferenz zwischen der aktuellen Zellenneuauswahlzeit und der historischen Zellenneuauswahlzeit, die dem einen historischen Pingpong-Neuauswahldatensatz entspricht, größer als eine voreingestellte Zeitdifferenz ist;
ein Auswahlmodul (405), das konfiguriert ist zum Neuauswählen der Nachbarzelle als eine aktuelle Versorgungszelle, um sich in der Nachbarzelle zu befinden, wenn die Zeitdifferenz zwischen der aktuellen Zellenneuauswahlzeit und der historischen Zellenneuauswahlzeit, die dem einen historischen Pingpong-Neuauswahldatensatz entspricht, größer als die voreingestellte Zeitdifferenz ist; und
ein Prozessmodul (501), das konfiguriert ist zum Verlängern der voreingestellten Zeitdifferenz nach dem Wiederauswählen der Nachbarzelle als der aktuellen Versorgungszelle; und
ein Aufzeichnungsmodul (502), das konfiguriert ist zum Aufzeichnen der Zellenneuauswahlinformationen in die historischen Pingpong-Neuauswahldatensätze zum Aktualisieren der historischen Pingpong-Neuauswahldatensätze.

4. Vorrichtung nach Anspruch 3, wobei das Beschaffungsmodul (402) Folgendes aufweist:
ein erstes Bestimmungsuntermodul (4021), das konfiguriert ist zum Bestimmen, wenn es wenigstens zwei Nachbarzellen gibt, die die Zellenneuauswahlbedingung erfüllen, gemäß einer Neuauswahlpriorität und/oder einer Signalgüte von einzelnen der wenigstens zwei Nachbarzellen, einer Zielnachbarzelle unter den wenigstens zwei Nachbarzellen; und
ein zweites Beschaffungsuntermodul (4022), das zum Beschaffen der Zellenneuauswahlinformationen, die der Zielnachbarzelle entsprechen, konfiguriert ist.

5. Computerprogrammprodukt, das in einem nichtflüchtigen computerlesbaren Speichermedium gespeicherte Anweisungen aufweist, wobei die genannten Anweisungen beim Ausführen auf einem Prozessor (920) einer Zellenneuauswahlvorrichtung (900) die Zellenneuauswahlvorrichtung (900) zum Durchführen der Schritte eines Verfahrens nach einem der vorhergehenden Ansprüche 1 bis 4 veranlassen.

## Revendications

1. Procédé de resélection de cellule, comprenant :
lorsque qu'un terminal mobile réside dans une cellule serveuse courante, déterminer (S101) si une cellule voisine répond à une condition de resélection de cellule ;
lorsque la cellule voisine répond à la condition de resélection de cellule, obtenir (S102) des informations de resélection de cellule correspondant à la cellule voisine ;
déterminer (S103) si les informations de resélection de cellule concordent avec un enregistrement de resélection ping-pong historique, où les informations de resélection de cellule comprennent au moins : l'identification de la cellule voisine ; et une raison pour la resélection de cellule, et chaque enregistrement de resélection ping-pong historique comprend au moins : un temps de resélection de cellule historique correspondant à l'enregistrement de resélection ping-pong; l'identification d'une cellule source correspondant à l'enregistrement de resélection ping-pong ; l'identification d'une cellule de destination correspondant à l'enregistrement de resélection ping-pong ; et une raison pour la resélection de cellule correspondant à l'enregistrement de resélection ping-pong,
où l'étape consistant à déterminer (S103) si les informations de resélection de cellule concordent avec un enregistrement de resélection de cellule historique, comprend :
lorsque les informations de resélection de cellule et l'un quelconque des enregistrements de resélection ping-pong historique répondent à une condition de concordance, déterminer que les informations de resélection de cellule concordent avec l'un quelconque des enregistrements de resélection ping-pong historique;
où la condition de concordance comprend :
l'identification de la cellule serveuse courante concorde avec l'identification de la cellule source correspondant à l'un quelconque des enregistrements de resélection ping-pong historique;
l'identification de la cellule voisine concorde avec l'identification de la cellule de destination correspondant à l'un quelconque des enregistrements de resélection ping-pong historique ; et
la raison pour la resélection de cellule concorde avec la raison pour la resélection de cellule correspondant à l'un quelconque des enregistrements de resélection ping-pong historique;
lorsque les informations de resélection de cellule concordent avec l'un quelconque des enregistrements de resélection ping-pong historique, déterminer (S104) si une différence de temps entre le temps de resélection de la cellule courante et le temps de resélection de cellule historique correspondant à l'enregistrement de resélection ping-pong historique est supérieure à une différence de temps préconsignée ;
lorsque la différence de temps entre le temps de resélection de la cellule courante et le temps de resélection de cellule historique correspondant à l'enregistrement de resélection ping-pong historique est supérieure à la différence de temps préconsignée, resélectionner (S105) la cellule voisine comme une cellule serveuse courante de manière à ce qu'elle réside dans la cellule voisine ;
après avoir resélectionné la cellule voisine comme la cellule serveuse courante, prolonger (S201) la différence de temps préconsignée ; et
enregistrer (S202) les informations de resélection de cellule dans les enregistrements de resélection ping-pong historique pour actualiser les enregistrements de resélection ping-pong historique.

2. Procédé selon la revendication 1, dans lequel lorsqu'il y a au moins deux cellules voisines qui répondent à la condition de resélection de cellule, l'étape consistant à obtenir (S102) les informations de resélection de cellule correspondant à la cellule voisine comprend :
conformément à une priorité de resélection et/ou à une qualité de signal de cellules individuelles des au moins deux cellules voisines, déterminer une cellule voisine cible parmi les au moins deux cellules voisines ; et
obtenir les informations de resélection de cellule correspondant à la cellule voisine cible.

3. Dispositif (900) de resélection de cellule, comprenant :
un premier module de détermination (401) configuré pour, lorsqu'un terminal mobile réside dans une cellule serveuse courante, déterminer si une cellule voisine répond à une condition de resélection de cellule ;
un module d'obtention (402) configuré pour, lorsque la cellule voisine répond à la condition de resélection de cellule, obtenir des informations de resélection de cellule correspondant à la cellule voisine ;
un deuxième module de détermination (403) configuré pour déterminer si les informations de resélection de cellule concordent avec un enregistrement de resélection ping-pong historique, où les informations de resélection de cellule comprennent au moins : un temps de resélection de cellule courante ; l'identification de la cellule serveuse courante ; l'identification de la cellule voisine ; et une raison pour la resélection de cellule, et chaque enregistrement de resélection ping-pong historique comprend au moins : un temps de resélection de cellule historique correspondant à l'enregistrement de resélection ping-pong ; l'identification d'une cellule source correspondant à l'enregistrement de resélection ping-pong ; l'identification d'une cellule de destination correspondant à l'enregistrement de resélection ping-pong ; et une raison pour la resélection de cellule correspondant à l'enregistrement de resélection ping-pong ;
un deuxième sous-module de détermination (4031) configuré pour, lorsque les informations de resélection de cellule et l'un quelconque des enregistrements de resélection ping-pong historique répondent à une condition de concordance, déterminer que les informations de resélection de cellule concordent avec l'un quelconque des enregistrements de résélection ping-pong historique ;
où la condition de concordance comprend :
l'identification de la cellule serveuse courante concorde avec l'identification de la cellule source correspondant à l'un quelconque des enregistrements de resélection ping-pong historique ;
l'identification de la cellule voisine concorde avec l'identification de la cellule de destination correspondant à l'un quelconque des enregistrements de resélection ping-pong historique ; et
la raison pour la resélection de cellule concorde avec la raison pour la resélection de cellule correspondant à l'un quelconque des enregistrements de resélection ping-pong historique;
un troisième module de détermination (404) configuré pour, lorsque les informations de resélection de cellule concordent avec l'un quelconque des enregistrements de resélection de cellule historique, déterminer si une différence de temps entre le temps de resélection de cellule courante et le temps de resélection de cellule historique correspondant à l'enregistrement de resélection ping-pong historique est supérieure à une différence de temps préconsignée ;
un module de sélection (405) configuré pour, lorsque la différence de temps entre le temps de resélection de cellule courante et le temps de resélection de cellule historique correspondant à l'enregistrement de resélection ping-pong historique est supérieure à la différence de temps préconsignée, resélectionner la cellule voisine comme une cellule serveuse courante de manière à ce qu'elle réside dans la cellule voisine ; et
un module de traitement (501) configuré pour, après que la cellule voisine a été resélectionnée comme la cellule serveuse courante, prolonger la différence de temps préconsignée ; et
un module d'enregistrement (502) configuré pour enregistrer les informations de resélection de cellule dans les enregistrements de resélection ping-pong historique pour actualiser les enregistrements de resélection ping-pong historique.

4. Dispositif selon la revendication 3, dans lequel le module d'obtention (402) comprend :
un premier sous-module de détermination (4021) configuré pour, lorsqu'il y a au moins deux cellules voisines qui répondent à la condition de resélection de cellule, conformément à une priorité de resélection et/ou à un signal de qualité de cellules individuelles des au moins deux cellules voisines, déterminer une cellule voisine cible parmi les au moins deux cellules voisines ; et
un deuxième sous-module d'obtention (4022) configuré pour obtenir les informations de resélection de cellule correspondant à la cellule voisine cible.

5. Produit de programme informatique comprenant des instructions stockées dans un support de stockage non transitoire lisible par ordinateur, lesdites instructions, lorsque exécutées sur un processeur (920) d'un dispositif de resélection de cellule (900), font que le dispositif de resélection de cellule (900) mette en œuvre les étapes d'un procédé selon l'une quelconque des revendications 1 à 4.
